# DEMANDE DE BREVET EUROPEEN

(11) **EP 4 174 996 A1**
(43) Date de publication de la demande: **03.05.2023**
(21) Numéro de dépôt: 22202955.5
(22) Date de dépôt: 21.10.2022
(51) Int. Cl.: H01M 10/04, H01M 10/052, H01M 10/0525, H01M 10/0587, H01M 50/107, H01M 50/152, H01M 50/528, H01M 50/534, H01M 50/536, H01M 50/545, H01M 50/548, H01M 50/586, H01M 50/59, H01M 50/609

(54) **ACCUMULATEUR ÉLECTROCHIMIQUE MÉTAL-ION INTÉGRANT UN COLLECTEUR DE COURANT FORMÉ PAR UN DISQUE EN POLYMÈRE THERMOPLASTIQUE CHARGÉ EN PARTICULES ET/OU FIBRES ÉLECTRIQUEMENT CONDUCTRICES**

(30) Priorité: 26.10.2021 FR 2111376
(71) Demandeur: Commissariat à l'énergie atomique et aux énergies alternatives, 75015 Paris (FR)
(72) Inventeur: VINCENT, Rémi, 38054 GRENOBLE CEDEX 09 (FR); SALOMON, Jérémie, 38054 GRENOBLE CEDEX 09 (FR); VINCENS, Christophe, 38054 GRENOBLE CEDEX 09 (FR); AMESTOY, Benjamin, 38054 GRENOBLE CEDEX 09 (FR); BARCHASZ, Céline, 38054 GRENOBLE CEDEX 09 (FR)
(74) Mandataire: Cabinet Nony

(57) **Abrégé**

Accumulateur électrochimique métal-ion intégrant un collecteur de courant formé par un disque en polymère thermoplastique chargé en particules et/ou fibres électriquement conductrices.

L'invention consiste essentiellement à proposer, dans un accumulateur à emballage rigide (boitier), au moins un collecteur de courant « intermédiaire », c'est-à-dire agencé entre le faisceau électrochimique de l'accumulateur et l'une des bornes de sortie de ce dernier, dont une partie sous la forme d'une plaquette (disque en géométrie cylindrique), en polymère thermoplastique chargée en particules et/ou fibres électriquement conductrices.

## Description

### Domaine technique

La présente invention concerne le domaine des accumulateurs électrochimiques, et plus particulièrement à des accumulateurs métal-ion.

Plus particulièrement, l'invention a trait à un accumulateur à emballage rigide et un module de batterie ou à un pack-batterie comprenant une pluralité de ces accumulateurs.

L'invention vise en premier lieu à améliorer la sécurité de tels modules ou pack-batterie.

Bien que décrite en référence à un accumulateur Lithium-ion, l'invention s'applique à tout accumulateur électrochimique métal-ion, c'est-à-dire également Sodium-ion, Magnésiumion, Aluminium-ion...ou de manière plus générale à tout accumulateur électrochimique. L'invention s'applique à toute chimie d'accumulateurs métal-ion, comme NMC/Graphite, NCA/Graphite, NMC/G-Si, LFP/ Graphite, Na-ion avec électrolyte liquide ou électrolyte dit solide.

Un module de batterie pack-batterie avec au moins un accumulateur selon l'invention peut être embarqué ou stationnaire. Par exemple, les domaines des transports électriques et hybrides et les systèmes de stockage connectés au réseau peuvent être envisagés dans le cadre de l'invention.

### Technique antérieure

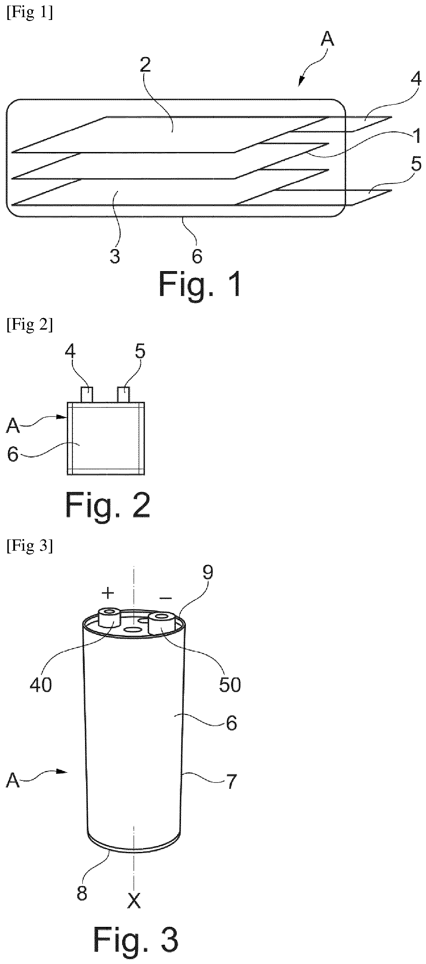

Telle qu'illustrée schématiquement en figures 1 et 2, une batterie ou accumulateur lithium-ion comporte usuellement au moins une cellule électrochimique C constituée d'un constituant d'électrolyte 1, imprégné dans un séparateur permettant d'isoler électriquement les électrodes, entre une électrode positive ou cathode 2 et une électrode négative ou anode 3, un collecteur de courant 4 connecté à la cathode 2, un collecteur de courant 5 connecté à l'anode 3 et enfin, un emballage 6 agencé pour contenir la cellule électrochimique et la rendre étanche à l'air extérieur et à l'électrolyte à l'intérieur de la cellule, tout en étant traversé par une partie des collecteurs de courant 4, 5.

L'architecture des batteries lithium-ion conventionnelles est une architecture que l'on peut qualifier de monopolaire, car avec une seule cellule électrochimique comportant une anode, une cathode et un électrolyte. Plusieurs types de géométrie d'architecture monopolaire sont connus :
- une géométrie cylindrique, avec enroulement autour d'un axe cylindrique telle que divulguée dans la demande de brevet US 2006/0121348,
- une géométrie prismatique, avec enroulement autour d'un axe parallélépipédique telle que divulguée dans les brevets US 7348098, US 7338733;
- une géométrie en empilement telle que divulguée dans les demandes de brevet US 2008/060189, US 2008/0057392, et brevet US 7335448.

Le constituant d'électrolyte peut être de forme solide, liquide ou gel. Sous cette dernière forme, le constituant peut comprendre un séparateur en polymère ou en composite microporeux imbibé d'électrolyte (s) organique (s) ou de type liquide ionique qui permet le déplacement de l'ion Lithium de la cathode à l'anode pour une charge et inversement pour une décharge, ce qui génère le courant. L'électrolyte est en général un mélange de solvants organiques, par exemple des carbonates dans lesquels est ajouté un sel de lithium typiquement LiPF6.

L'électrode positive ou cathode est constituée de matériaux d'insertion du cation Lithium qui sont en général composite, comme le phosphate de fer lithié LiFePO₄, l'oxyde de cobalt lithié LiCoO₂, l'oxyde de manganèse lithié, éventuellement substitué, LiMn₂O₄ ou d'oxyde de métaux de transition, comme les matériaux lamellaires par exemple, un matériau à base de LiNiₓMn_{y}Co_{z}O₂ avec x+y+z = 1, tel que LiN_{0.33}Mn_{0.33}CO_{0.33}O₂, ou un matériau à base de type oxyde de nickel cobalt aluminium LiNiₓCo_{y}Al_{z}O₂ avec x+y+z = 1, tel que LiNi_{0.8}Co_{0.15}Al_{0.05}O₂.

L'électrode négative ou anode est très souvent constituée de carbone, graphite ou de Li₄TiO₅O₁₂ (matériau titanate), éventuellement peut-être à base de silicium ou à base de lithium, ou à base d'étain et de leurs alliages ou de composite formé à base de silicium. Cette électrode négative tout comme l'électrode positive peut également contenir des additifs conducteurs électroniques ainsi que des additifs polymères qui lui confèrent des propriétés mécaniques et des performances électrochimiques appropriées à l'application batterie lithium-ion ou à son procédé de mise en oeuvre.

L'anode et la cathode en matériau d'insertion au Lithium peuvent être déposées en continu selon une technique usuelle sous la forme d'une couche active sur une feuille ou feuillard métallique constituant un collecteur de courant.

Le collecteur de courant connecté à l'électrode positive est en général en aluminium.

Le collecteur de courant connecté à l'électrode négative est en général en cuivre, en nickel, en cuivre nickelé ou en aluminium.

Plus précisément, l'aluminium est utilisé pour les collecteurs de courant communs à des électrodes positive et négative de titanate Li₄Ti₅O₁₂. Le cuivre est plutôt pour les électrodes négatives de graphite (Cgr), de silicium (Si) ou de composite silicium (Si-C).

Traditionnellement, une batterie ou accumulateur Li-ion utilise un couple de matériaux à l'anode et à la cathode lui permettant de fonctionner à un niveau de tension, typiquement entre 1,5 et 4,2 Volt.

Selon le type d'application visée, on cherche à réaliser soit un accumulateur lithium-ion fin et flexible soit un accumulateur rigide : l'emballage est alors soit souple soit rigide et constitue dans ce dernier cas en quelque sorte un boitier.

Les emballages rigides (boitiers) sont usuellement fabriqués à partir d'un matériau métallique, typiquement un alliage d'aluminium ou en acier inoxydable ou d'un polymère rigide comme l'acrylonitrile butadiène styrène (ABS).

Une batterie ou accumulateur Li-ion comporte un emballage rigide ou boitier lorsque les applications visées sont contraignantes où l'on cherche une longue durée de vie, avec par exemple des pressions à supporter bien supérieures et un niveau d'étanchéité requis plus strict, typiquement inférieure à 10-6 mbar.l/s d'hélium, ou dans des milieux à fortes contraintes comme le domaine aéronautique ou spatial. L'avantage principal des emballages rigides est ainsi leur étanchéité élevée et maintenue au cours du temps du fait que la fermeture des boitiers est réalisée par soudure, en générale par soudure au laser.

La géométrie de la plupart des boitiers rigides d'emballages d'accumulateurs Li-ion est cylindrique, car la plupart des cellules électrochimiques des accumulateurs sont enroulées par bobinage selon une géométrie cylindrique. Des formes prismatiques de boitiers ont également déjà été réalisées.

Un des types de boitier rigide de forme cylindrique, usuellement fabriqué pour un accumulateur Li-ion de forte capacité et à durée de vie supérieure à 10 ans, est illustré en figure 3.

Le boitier 6 d'axe longitudinal X comporte une enveloppe latérale cylindrique 7, un fond 8 à une extrémité, un couvercle 9 à l'autre extrémité. Le couvercle 9 supporte les pôles ou bornes de sortie du courant 40, 50. Une des bornes de sortie (pôles), par exemple la borne positive 40 est soudée sur le couvercle 9 tandis que l'autre borne de sortie, par exemple la borne négative 50, passe à travers le couvercle 9 avec interposition d'un joint non représenté qui isole électriquement la borne négative 50 du couvercle.

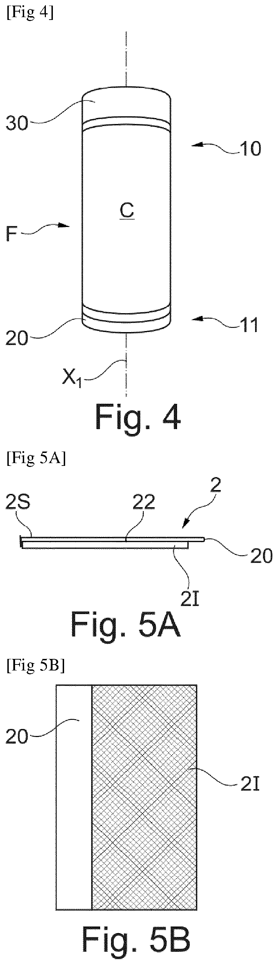

On a reproduit à la figure 4 les photographies d'un faisceau électrochimique F de forme allongée selon un axe longitudinal X1 et comportant une seule cellule électrochimique C telle qu'elle est usuellement enroulée par bobinage avant les étapes de logement dans un boitier, de raccordement électrique aux bornes de sortie de l'accumulateur et son imprégnation par un électrolyte. La cellule C est constituée d'une anode 3 et d'une cathode 4 de part et d'autre d'un séparateur (non visible) adapté pour être imprégné de l'électrolyte. Comme cela est visible, l'une 10 de ses extrémités latérales du faisceau F est délimitée par la bande 30 de l'anode 3 non revêtue, tandis que l'autre 11 de ses extrémités latérales est délimitée par la bande 20 de la cathode 2 non revêtue.

Par « bande non revêtue » ou « rive », on entend ici et dans le cadre de l'invention, une portion latérale d'une feuille métallique, aussi appelée feuillards, formant un collecteur de courant, qui n'est pas recouverte d'un matériau d'insertion aux ions métal, tel que le lithium dans le cas d'un accumulateur Li-ion.

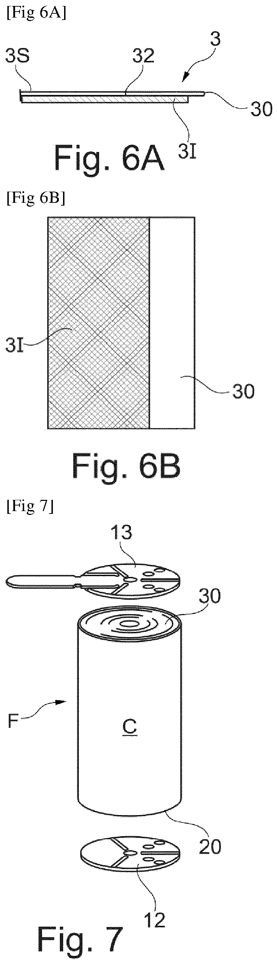

On a représenté plus en détail, respectivement en figures 5A et 5B et en figures 6A et 6B, une électrode positive ou cathode 2 et une électrode négative ou anode 3 à partir desquelles un faisceau électrochimique actuel est réalisé par bobinage avec un séparateur 4 intercalé entre cathode 2 et anode 3. La cathode 2 est constituée d'un substrat 2S formé d'un feuillard métallique qui supporte dans sa portion centrale 22, un matériau actif d'insertion au lithium 2I, tandis que sa bande latérale (rive) 20 est dépourvue de matériau actif d'insertion. De même, l'anode 3 est constituée d'un substrat 2S formé d'un feuillard métallique qui supporte dans sa portion centrale 32, un matériau actif d'insertion au lithium 3I, et sa rive 30 est dépourvue de matériau actif d'insertion. Chaque feuillard métallique 2S, 3S est réalisé en un seul tenant, c'est-à-dire caractéristiques géométriques et métallurgiques sur toute sa surface.

A partir d'un faisceau électrochimique tel qu'illustré à la figure 4, on réalise généralement un tassage axial des feuillards d'électrodes au niveau de leurs rives 20 30.

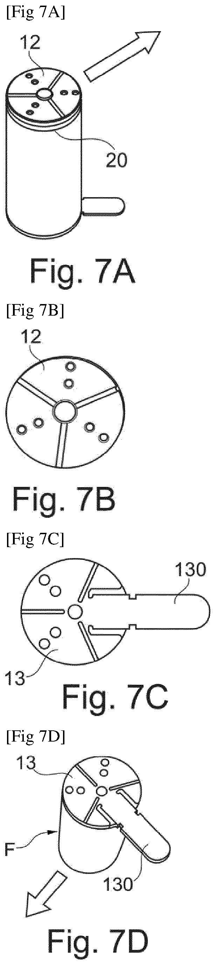

Une fois le tassage réalisé, on soude l'une des extrémités latérales 11 du faisceau F, de préférence, avec un collecteur de courant 12 usuel sous la forme d'un disque plein métallique, lui-même destiné à être soudé par la suite avec le fond 8 du boitier 6 d'accumulateur (figures 7, 7A, 7B).

On procède de la même manière entre l'autre des extrémités latérales 10 du faisceau, et une partie de collecteur de courant 13 usuel sous la forme d'un disque plein métallique, percé en son centre et d'une languette 130 faisant saillie latéralement du disque 13 (figures 7, 7C, 7D).

Pour finaliser la réalisation définitive de l'accumulateur, on procède usuellement comme suit.

On introduit le faisceau avec le collecteur 13 dans un récipient rigide en aluminium formant uniquement l'enveloppe latérale 7 du boitier 6. Lors de cette étape, pour que la languette 130 ne gêne pas l'introduction, on replie celle-ci vers le haut.

On soude le collecteur 12 avec le fond 8 du boitier 6.

On soude le collecteur 13 à un pôle négatif 50 formant une traversée d'un couvercle 9 de boitier 6.

On soude alors le couvercle 9 au récipient rigide métallique 7.

Puis on effectue une étape de remplissage du boitier 6 à l'aide d'un électrolyte, au travers d'une ouverture débouchante non représentée qui est pratiquée dans le couvercle 9.

La réalisation de l'accumulateur Li-ion selon l'invention prend fin par le bouchage de l'ouverture de remplissage.

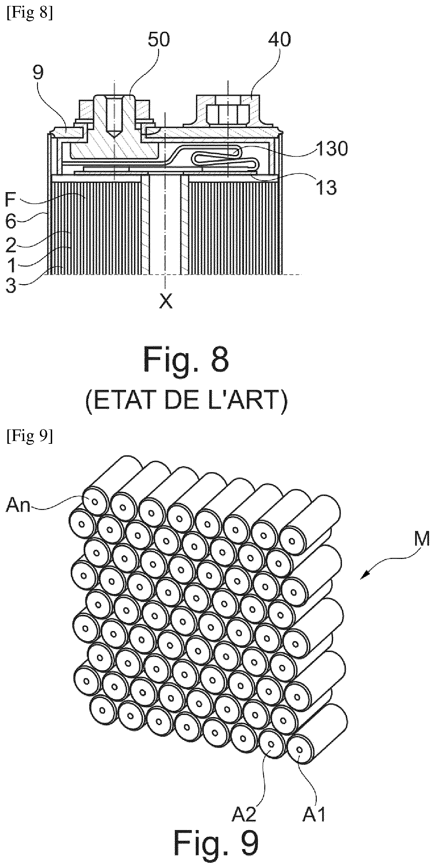

Un exemple d'accumulateur Li-ion finalisé est montré à la figure 8 : une des bornes de sortie 50, en général la borne négative, traverse le boîtier 6 de manière isolée électriquement et est raccordée électriquement à une électrode de même polarité du faisceau électrochimique F au moyen du collecteur de courant 13, dont la languette plane 130 est repliée sur elle-même.

L'autre des bornes de sortie 40, en général la borne positive , est quant à elle soudée au couvercle 9 du boîtier 6 lui-même raccordé électriquement à l'électrode du faisceau électrochimique F de polarité opposée à celle de la borne 50.

Un pack batterie est constitué d'un nombre variable d'accumulateurs pouvant atteindre plusieurs milliers qui sont reliés électriquement en série ou en parallèle entre eux et généralement par des barres de connexion, appelées usuellement busbars.

Un exemple de module de batterie M d'un pack-batterie est montré en figure 9. Ce pack est constitué de plusieurs accumulateurs Li-ion A1, A2...An identiques. Cet exemple illustré est relativement standard, pour optimiser le volume dans le module M : les accumulateurs A1, A2...An sont assemblés en quinconce et certains reliés entre eux en série, et d'autres en parallèle, au moyen de clinquants ou busbars, typiquement en cuivre, de préférence en cuivre recuit nickelé.

Dans le développement et la fabrication des batteries lithium-ion, pour chaque profil/nouvelle demande, quel que soit les acteurs du marché, cela nécessite des dimensionnements précis (architectures électriques série/parallèle, mécaniques, thermiques...) pour concevoir de manière optimale un pack batterie performant et sûr.

En particulier, la sécurité des accumulateurs lithium-ion doit être prise en considération à la fois à l'échelle d'un accumulateur seul, d'un module et d'un pack-batterie.

Ainsi, dans le cadre d'une étude d'analyse des modes de défaillance, de leurs effets et de leur criticité (AMDEC) l'inventeur a pu mettre en évidence qu'un des risques les plus critiques pour un module M d'accumulateurs était le court-circuit interne à un accumulateur, suite à un défaut de fabrication (avec un taux de défaillance de 10⁻⁷/h).

Différents dispositifs passifs ou actifs ayant une fonction de sécurité peuvent également être intégrés au niveau d'une cellule (accumulateur), et/ou d'un module et/ou du pack-batterie pour prévenir les problèmes, lorsque la batterie se retrouve dans des conditions dites de fonctionnement abusif.

Un système électrochimique lithium, que ce soit à l'échelle de la cellule (accumulateur), du module ou du pack, produit des réactions exothermiques quel que soit le profil de cyclage donné. Ainsi, à l'échelle d'un accumulateur unitaire, en fonction des chimies considérées, le fonctionnement optimal des accumulateurs lithium ion est limité dans une certaine gamme de température.

Un accumulateur électrochimique doit fonctionner dans une plage de température définie, typiquement généralement inférieure à 70°C à sa surface extérieure de boitier, sous peine de dégrader ses performances, voire de le dégrader physiquement jusqu'à destruction.

On peut citer pour exemple les accumulateurs lithium de chimie fer-phosphate qui ont une plage de fonctionnement comprise généralement entre -20 °C et +60 °C. Au-delà de 60 °C, les matériaux peuvent subir des dégradations importantes réduisant les performances de la cellule. Au-delà d'une température dite d'emballement thermique pouvant être comprise entre 70°C et 110°C, il y a amorçage de réactions chimiques internes exothermiques.

Lorsque l'accumulateur n'est plus capable d'évacuer suffisamment de chaleur, la température de la cellule augmente jusqu'à destruction, ce phénomène étant désigné usuellement sous l'appellation d'emballement thermique (en anglais «Thermal Runaway»).

Autrement dit, un emballement thermique se produit dans une cellule (accumulateur), lorsque l'énergie dégagée par les réactions exothermiques qui surviennent à l'intérieur de celle-ci, excède la capacité à la dissiper à l'extérieur. Cet emballement peut être suivi d'une génération de gaz et d'explosion et/ou feu.

Également, le maintien d'une température inférieure à 70°C permet d'augmenter la durée de vie d'un accumulateur, car plus la température de fonctionnement d'un accumulateur est élevée, plus sa durée de vie sera diminuée.

En outre, certaines chimies d'accumulateurs requièrent une température de fonctionnement bien au-delà de la température ambiante et par conséquent, il s'avère nécessaire de réguler leur niveau de température par un préchauffage initial des accumulateurs, voire par un maintien en température permanent des accumulateurs.

Au niveau d'une cellule (accumulateur), les différents dispositifs internes de protection connus sont:
- un dispositif à coefficient de température positif (PTC acronyme anglo-saxon pour « Polymeric positive Temperature Coefficient ») : actuellement, un grand nombre d'accumulateurs cylindriques déjà commercialisés en sont munis. Un tel dispositif se présente sous la forme d'un anneau en polymère (polyéthylène) laminé avec un métal. En cas de surcharge, ce polymère chauffe, change de phase, devient plus résistif et limite ainsi le passage du courant ;
- un dispositif d'interruption du courant (CID pour « current interruption device ») : il interrompt le courant si la pression du gaz dans la cellule dépasse les limites spécifiées ;
- un dispositif coupe circuit (en anglais « shutdown ») qui empêche la génération de courants élevés ;
- un évent constitué d'une soupape ou d'un disque de rupture, qui s'ouvre lorsque la pression augmente brutalement, et dépasse une pression critique déterminée, afin d'éviter l'explosion de la cellule ;
- un fusible thermique, actuellement mis en oeuvre dans les accumulateurs de grande capacité, qui coupe le courant dès lors que la température dans l'accumulateur est trop élevée.

Une solution de protection interne qui semble être particulièrement pertinente pour limiter les risques d'explosion d'un accumulateur lors d'un défaut de court-circuit interne consiste à mettre en oeuvre des collecteurs multicouches.

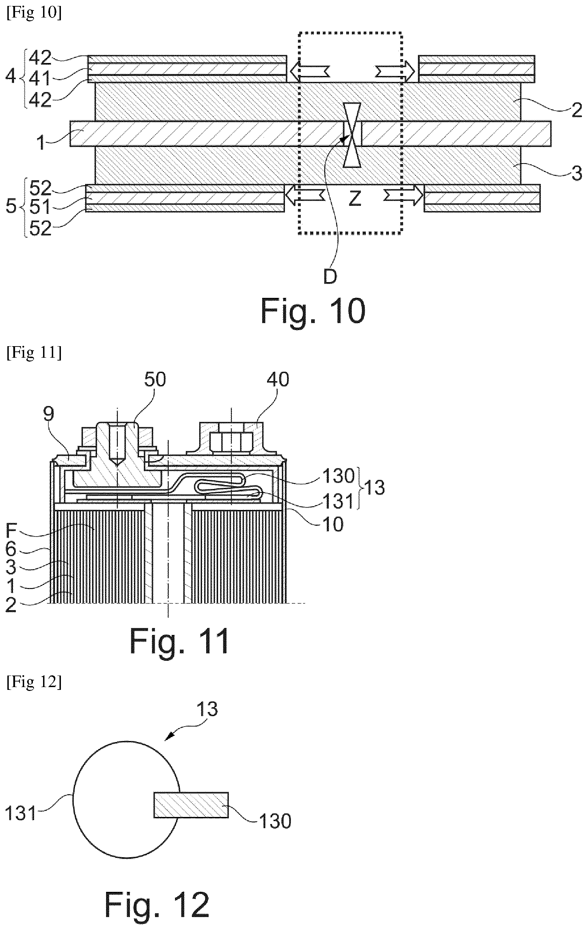

On a représenté schématiquement à la figure 10, un exemple de tels collecteurs multicouches 4, 5 et leur principe de fonctionnement.

Le collecteur de courant de cathode 4 est constitué d'un empilement d'un film d'aluminium 41 entre deux films 42 de polymère thermo-rétractable.

Le collecteur de courant d'anode 5 est constitué d'un empilement d'un film de cuivre 51 entre deux films 52 de polymère thermo-rétractable.

En présence d'un défaut de court-circuit D, l'échauffement local dans la zone de haute température Z, en pointillés sur la figure 10, induit une rétractation des collecteurs multicouches 4, 5 sans rétractation du séparateur 1. Cette rétractation augmente drastiquement la résistance interne de l'accumulateur et donc conduit à une forte diminution du courant de court-circuit. Ainsi la mise en oeuvre de ces collecteurs multicouches 4, 5 diminue fortement l'impact d'un court-circuit interne sur l'emballement thermique d'un accumulateur.

Cette solution de collecteurs multicouches présente plusieurs inconvénients majeurs.

Le premier, est que du fait de sa structure, il n'est pas possible de souder ces collecteurs avec une languette (tab) comme cela est généralement fait avec des collecteurs de courant standard.

Le deuxième, est que comme il y a moins de cuivre ou d'aluminium que dans un collecteur standard la conductivité globale du collecteur multicouches est plus faible, ce qui nuit donc à la circulation du courant électrique.

Dans une batterie, ou pack-batterie à plusieurs accumulateurs Li-ion, la mise en série ou parallèle d'accumulateurs plus ou moins différents peut entraîner des conséquences sur la performance résultante du pack.

Il est ainsi reconnu que dans un pack-batterie, par exemple de véhicule électrique, les dispersions de vieillissements peuvent être élevées en fonction par exemple de la position des accumulateurs, suite à des dissymétries de vieillissement entre les accumulateurs ou des différences d'utilisations (variations thermiques entre le coeur et les bords du pack, gradient de courant...).

Aussi, afin de limiter le vieillissement prématuré du pack, il est nécessaire d'optimiser la température de fonctionnement et la dispersion de température d'un accumulateur à l'autre. Un accumulateur (ou des accumulateurs) qui vieillit (vieillissent) plus vite que les autres peut (peuvent) avoir un impact direct sur les performances électriques du pack-batterie complet. Cela se traduit par la diminution de la capacité totale utilisable du pack batterie.

A l'échelle du module et du pack, typiquement en dessous de 0°C par exemple, il peut être nécessaire d'avoir recours à un BMS, afin de limiter la puissance demandée au pack afin d'éviter une dégradation des accumulateurs particulièrement pour la charge de la batterie.

On rappelle ici que le BMS (acronyme anglais de « Battery Management System ») est utilisé afin de protéger les éléments de facteurs augmentant leur dangerosité, tel des courants trop élevés, des potentiels non adaptés (trop élevés ou trop faibles), des températures limites. Le BMS stoppe donc les applications de courant (charge, décharge) dès l'atteinte de tensions seuils.

Au-delà d'une température supérieure, typiquement de l'ordre 70°C, il convient également d'être vigilant car des réactions électrochimiques peuvent conduire à la destruction des accumulateurs unitaires et provoquer une propagation d'un défaut interne à l'accumulateur, généralement un court-circuit interne, qui peut conduire à l'extrême à l'explosion du pack. Dans ce cas, il est également nécessaire d'avoir recours au BMS, afin de protéger les accumulateurs.

La difficulté intervient pour assurer l'uniformité de la température au sein d'un pack-batterie.

Par conséquent, ces considérations thermiques imposent généralement une régulation de la température des accumulateurs d'un pack batterie.

Diverses stratégies de gestion thermique sont proposées pour optimiser les systèmes de refroidissement intégré et permettre au pack de batteries de fonctionner à une température ambiante cible et d'assurer une homogénéité de la température des cellules. Le système de gestion thermique doit donc être capable de réagir, et de manière très précise, si un gradient de température est observé au niveau des cellules le constituant.

Dans la littérature, les solutions divulguées pour tenter d'assurer une homogénéité de température au sein d'un pack-batterie consistent essentiellement à utiliser soit des plaques froides, soit un système de circulation liquide de fluide caloporteur (gazeux ou liquide) au sein du pack, soit un matériau à changement de phase.

Comme évoqué ci-dessus, une cellule ou un accumulateur du pack-batterie peut subir un emballement thermique.

Or, mis à part les solutions à collecteurs multicouches évoqués ci-avant, il apparaît que tous les dispositifs de protection interne ou de refroidissement selon l'art antérieur, que ce soit à l'échelle de l'accumulateur, d'un module ou d'un pack-batterie, ne permettent pas de mitiger réellement un emballement thermique d'un accumulateur au sein d'un pack-batterie, c'est-à-dire qui permettent d'éviter ou d'atténuer la transmission de l'énergie dissipée par un emballement thermique de l'accumulateur aux autres accumulateurs du pack, afin d'éviter qu'eux-mêmes ne rentrent dans une situation d'emballement thermique.

Il existe un besoin pour améliorer les solutions permettant d'éviter ou à tout le moins d'absorber l'énergie dissipée par un emballement thermique d'un accumulateur donné au sein du pack, suite à un court-circuit interne et ainsi de limiter la température des autres accumulateurs du pack et par-là d'éviter que ces autres accumulateurs ne partent également en emballement thermique.

En outre, l'amélioration doit aussi être optimisée en termes de poids et d'encombrement pour préserver les performances du pack.

Le but général de l'invention est alors de répondre au moins en partie à ce besoin.

### Exposé de l'invention

Pour ce faire, l'invention a tout d'abord pour objet un accumulateur électrochimique métal-ion comprenant :
- un faisceau électrochimique comportant au moins une cellule électrochimique constituée d'une cathode et d'une anode de part et d'autre d'un séparateur imprégné d'un électrolyte, la cathode et l'anode comprenant chacune un substrat, formé d'un feuillard métallique qui supporte dans sa portion centrale un matériau actif d'insertion d'ion métal, tandis que sa bande latérale, dite rive, est dépourvue de matériau actif d'insertion, le faisceau ayant une forme allongée selon un axe longitudinal X1, avec à l'une de ses extrémités latérales, la bande latérale de l'anode et à l'autre de ses extrémités latérales la bande latérale de la cathode;
- un boitier métallique agencé pour contenir le faisceau électrochimique avec étanchéité, comportant :
   un fond auquel est soudé un collecteur de courant; et
   un couvercle avec une traversée formant une borne de sortie à laquelle est soudé un autre collecteur de courant,
   l'un et/ou l'autre des collecteurs de courant comprenant au moins une partie d'une plaquette en polymère thermoplastique chargée en particules et/ou fibres électriquement conductrices, thermoscellée à l'une des extrémités latérales du faisceau électrochimique.

Avantageusement, le polymère thermoplastique est choisi parmi le styrène butadiène, le polyéthylène et le polyéthylène glycol.

Avantageusement encore, les particules et/ou fibres sont en métal ou alliage métallique, choisi parmi le cuivre, l'aluminium et le nickel et leurs alliages.

De préférence, la proportion des particules et/ou fibres dans le polymère est comprise entre 20 et 80%.

Selon une variante de réalisation avantageuse, la plaquette est un disque de diamètre sensiblement égal au diamètre du faisceau électrochimique.

Selon une autre variante de réalisation avantageuse, la plaquette comprend des orifices débouchant adaptés pour laisser passer l'électrolyte d'imprégnation du séparateur.

Selon une configuration avantageuse, l'un et/ou l'autre des collecteurs de courant comprend une languette métallique de connexion à une borne de sortie, la plaquette étant thermoscellée à la languette.

Pour une application Li-ion, l'accumulateur est un accumulateur Li-ion dans lequel:
- le matériau d'électrode(s) négative(s) est choisi dans le groupe comportant le graphite, le lithium, l'oxyde de titanate Li₄TiO₅O₁₂;
- le matériau d'électrode(s) positive(s) est choisi dans le groupe comportant LiFePO₄, LiCoO₂, LiN_{0.33}Mn_{0.33}CO_{0.33}O₂, LiNi_{0.6}Co_{0.2}Mn_{0.2}O₂, LiNi_{0.8}Mn_{0.1}Co_{0.1}O₂, NiCoAl.

L'invention a également pour objet un module de batterie ou un pack-batterie comprenant une pluralité d'accumulateurs tels que celui décrit précédemment, reliés électriquement en série ou en parallèle les uns aux autres.

L'invention a également pour objet un procédé de réalisation d'une partie de raccordement électrique entre un faisceau électrochimique d'un accumulateur métal-ion et l'une des bornes de sortie de l'accumulateur, comportant les étapes suivantes :
- fourniture d'un faisceau électrochimique comportant au moins une cellule électrochimique constituée d'une cathode et d'une anode de part et d'autre d'un séparateur destiné à être imprégné d'un électrolyte, la cathode et l'anode comprenant chacune un substrat, formé d'un feuillard métallique qui supporte dans sa portion centrale un matériau actif d'insertion d'ion métal, tandis que sa bande latérale, dite rive, est dépourvue de matériau actif d'insertion, le faisceau ayant une forme allongée selon un axe longitudinal X1, avec à l'une de ses extrémités latérales, la bande latérale de l'anode et à l'autre de ses extrémités latérales la bande latérale de la cathode;
- thermoscellage à l'une et/ou l'autre des extrémités latérales du faisceau électrochimique d'un collecteur de courant comprenant au moins une partie d'une plaquette en polymère thermoplastique chargé en particules et/ou fibres électriquement conductrices, destinée à être liée ou connectée électriquement à une borne de sortie de l'accumulateur.

Le thermoscellage est avantageusement réalisé à une température entre 120 et 250°C.

Le thermoscellage est également avantageusement réalisé en appliquant un effort de pression de la plaquette contre l'une et/ou l'autre des extrémités latérales du faisceau électrochimique.

Selon une configuration avantageuse, le faisceau électrochimique est constitué d'une seule cellule électrochimique enroulée sur elle-même par bobinage.

Ainsi, l'invention consiste essentiellement à proposer, dans un accumulateur à emballage rigide (boitier), au moins un collecteur de courant « intermédiaire », c'est-à-dire agencé entre le faisceau électrochimique de l'accumulateur et l'une des bornes de sortie de ce dernier, dont une partie sous la forme d'une plaquette (disque en géométrie cylindrique), en polymère thermoplastique chargée en particules et/ou fibres électriquement conductrices.

La plaquette thermoscellée au faisceau électrochimique constitue en premier lieu une reprise de courant sur la hauteur du faisceau électrochimique, et il est aisé de la connecter électriquement à une languette de sortie. La languette de sortie peut aussi être thermoscellée à la plaquette avant de thermosceller l'ensemble au faisceau électrochimique.

La température de scellage de la plaquette est choisie pour être inférieure à la température de rétrécissement du séparateur et des feuillards métalliques constituant les électrodes du faisceau électrochimique ainsi que celle de la languette métallique (tab) destinée à être connectée directement à la borne de sortie de l'accumulateur. Typiquement, la température de thermoscellage est au maximum égale à 250°C, bien inférieure à la température de fusion d'une tab.

Ainsi, le thermoscellage de la plaquette sur le faisceau électrochimique n'engendre aucune rétractation des autres éléments métalliques assurant le passage du courant du faisceau vers la borne de sortie d'un accumulateur.

En outre, comme la reprise de courant se fait directement sur la largeur du faisceau électrochimique, la distance moyenne entre la plaquette formant le collecteur et une languette métallique est fortement diminuée par rapport aux collecteurs multicouches selon l'état de l'art, à polymère de part et d'autre de films métalliques, comme mentionné en préambule. Typiquement cette diminution peut être d'un facteur 10.

Autrement dit, l'invention permet de conserver les avantages des collecteurs multicouches à polymère de part et d'autre de films métalliques comme mentionné en préambule tout en palliant leurs inconvénients, à savoir l'impossibilité de souder des languettes métalliques et une diminution de la conductivité électrique globale du collecteur.

En fonctionnement normal d'un accumulateur, du fait des particules et/ou fibres conductrices qu'elle intègre, la plaquette conduit le courant électrique depuis le faisceau électrochimique vers une borne de sortie de l'accumulateur et vice-et-versa.

En cas d'échauffement local dans le faisceau électrochimique lié à un défaut, le polymère de la plaquette va fondre pour éviter à tout le moins réduire fortement l'impact d'un court-circuit interne sur l'emballement thermique de l'accumulateur. Ainsi, la fusion du polymère va augmenter très fortement et rapidement la résistance interne de l'accumulateur et donc conduit à une forte diminution du courant de court-circuit. Et par-là, minimiser l'impact de l'emballement thermique de l'accumulateur.

En ce qui concerne le phénomène d'emballement thermique, on se reportera à la publication [1] et au protocole décrit dans cette publication. Les températures dites « d'autoéchauffement » et « d'emballement thermique » sont respectivement notées T1 et T2 dans cette publication.

La température T1, typiquement 70°C, dans la figure 2 de la publication, est la température à partir de laquelle l'accumulateur s'échauffe sans source externe à une vitesse typique de 0,02 °C/min en conditions adiabatiques.

La température T2, typiquement 150°C, dans la figure 2 de la publication, est la température à partir de laquelle l'accumulateur s'échauffe à une vitesse d'échauffement typique de 10°C/min en conditions adiabatiques, ce qui conduit à la fusion du séparateur dans le faisceau électrochimique de l'accumulateur, à un court-circuit et donc à l'effondrement de la tension.

Par « emballement thermique », on peut ainsi comprendre ici et dans le cadre de l'invention, un rapport entre la valeur de la dérivée de la température d'échauffement et celle du temps au moins égal à 0,02°C par min.

L'accumulateur selon l'invention peut être de géométrie cylindrique ou prismatique.

D'autres avantages et caractéristiques ressortiront mieux à la lecture de la description détaillée, faite à titre illustratif et non limitatif, en référence aux figures suivantes.

### Brève description des dessins

[Fig 1] la figure 1 est une vue schématique en perspective éclatée montrant les différents éléments d'un accumulateur lithium-ion.
[Fig 2] la figure 2 est une vue de face montrant un accumulateur lithium-ion avec son emballage souple selon l'état de l'art.
[Fig 3] la figure 3 est une vue en perspective d'un accumulateur lithium-ion selon l'état de l'art avec son emballage rigide constitué d'un boitier.
[Fig 4] la figure 4 est une vue photographique en perspective d'un faisceau électrochimique d'un accumulateur lithium-ion, le faisceau étant constitué d'une seule cellule électrochimique enroulée sur elle-même par bobinage.
[Fig 5A] [Fig 5B] les figures 5A et 5B sont des vues respectivement de côté et de dessus d'une électrode positive du faisceau électrochimique selon la figure 4.
[Fig 6A] [Fig 6B] les figures 6A et 6B sont des vues respectivement de côté et de dessus d'une électrode négative du faisceau électrochimique selon la figure 4.
[Fig 7] [Fig 7A] [Fig 7B] [Fig 7C] [Fig 7D] les figures 7 et 7A à 7D sont des vues en perspective et de dessus de chacun des deux collecteurs de courant soudé à l'une des extrémités latérales d'un faisceau électrochimique selon l'état de l'art.
[Fig 8] la figure 8 est une vue en coupe axiale d'une partie d'un accumulateur lithium-ion selon l'état de l'art.
[Fig 9] la figure 9 est une vue en perspective d'un module de batterie selon l'état de l'art au sein duquel la pluralité d'accumulateurs lithium-ion est agencée en quinconce.
[Fig 10] la figure 10 est une vue en coupe longitudinale d'une partie d'un accumulateur lithium-ion selon l'état de l'art avec des collecteurs de courant multicouches à polymère de part et d'autre d'un film métallique.
[Fig 11] la figure 11 est une vue en coupe axiale d'une partie d'un accumulateur lithium-ion avec un collecteur de courant selon l'invention.
[Fig 12] la figure 12 est une vue de dessus d'un collecteur de courant selon l'invention.
[Fig 13] la figure 13 est une vue de dessus d'une variante d'un collecteur de courant selon l'invention.
[Fig 14] la figure 14 est une vue de dessus d'une autre variante d'un collecteur de courant selon l'invention.

### Description détaillée

Par souci de clarté, les mêmes références désignant les mêmes éléments d'un accumulateur au lithium-ion selon l'état de l'art et selon l'invention sont utilisées pour toutes les figures 1 à 14.

On précise que les différents éléments selon l'invention sont représentés uniquement par souci de clarté et qu'ils ne sont pas à l'échelle.

On précise également que les termes de « longueur » et « latéral » se rapportant à une électrode sont à considérer lorsqu'elle est à plat avant son bobinage.

Les termes de «hauteur » et « latéral » se rapportant au faisceau électrochimique sont à considérer en configuration à la verticale avec ses extrémités latérales respectivement sur le haut et sur le bas.

Les figures 1 à 10 relatives à l'état de l'art ont déjà été commentées en préambule. Elle ne seront donc pas détaillées ci-après.

Pour améliorer la sécurité de fonctionnement d'un accumulateur Li-ion, les inventeurs proposent une nouvelle réalisation de collecteur de courant et un nouveau procédé de réalisation de raccordement électrique du faisceau électrochimique à au moins l'une de ses bornes de sortie à partir de cette électrode.

La figure 11 montre une partie d'un accumulateur Li-ion avec un collecteur de courant selon l'invention.

Ce collecteur de courant 13 raccorde électriquement une des bornes de sortie 50, en général la borne négative, montée en traversée isolante électrique à travers le boîtier 6 de d'accumulateur à une extrémité latérale 10 du faisceau électrochimique F qui est l'électrode de même polarité que la borne 50.

Ce collecteur de courant 13 comprend un disque 131 en polymère thermoplastique chargée en particules et/ou fibres électriquement conductrices, qui est thermoscellée à l'extrémité latérale 10 du faisceau électrochimique. Le polymère thermoplastique peut être choisi parmi le styrène butadiène, le polyéthylène et le polyéthylène glycol. Les fibres et/ou particules sont de préférence métalliques, en cuivre, aluminium ou nickel.

La proportion des particules et/ou fibres dans le polymère est de préférence comprise entre 20 et 80%.

Une languette métallique de connexion 130 repliée sur elle-même, qui a été fixée au préalable sur le disque 131, relie électriquement ce dernier et donc le faisceau électrochimique F à la borne de sortie 50.

La reprise du courant peut être réalisée sur toute la surface de l'extrémité latérale 10 au moyen du disque 131.

Ainsi, en fonctionnement normal, de part ses fibres et/ou particules métalliques, le disque 131 assure avec la languette métallique 130 qui y est fixée, la continuité électrique entre le faisceau électrochimique F et la borne de sortie 50.

En cas de défaut interne au faisceau électrochimique F provoquant un échauffement local susceptible de générer un emballement thermique de l'accumulateur, le polymère disque 131 peut fondre et ainsi augmenter très fortement et rapidement la résistance interne de l'accumulateur et donc conduit à une forte diminution du courant de court-circuit.

En conséquence, l'impact de l'emballement thermique de l'accumulateur à d'autres accumulateurs environnant au sein d'un module de batterie peut être annihilé.

On décrit maintenant les différentes étapes d'un procédé de réalisation d'un accumulateur Li-ion au moyen d'un collecteur de courant 13 selon l'invention.

On précise qu'au préalable on thermoscelle le disque 131 du collecteur de courant 13 à une d'une languette 130 faisant saillie latéralement du disque 131 (figure 12).

Etape i/: On enroule par bobinage l'anode 3, la cathode 2 et au moins un film de séparateur 4 de la cellule électrochimique C autour d'un support non représenté.

Le faisceau a donc une forme cylindrique allongée selon un axe longitudinal X1, avec à l'une 10 de ses extrémités latérales, une bande 30 d'anode 3 non revêtue et, à l'autre 11 de ses extrémités latérales, une bande 20 de cathode 2 non revêtue.

Etape ii/: On soude alors l'une des extrémités latérales 11 du faisceau, à un collecteur de courant 14 usuel sous la forme d'un disque plein métallique, lui-même destiné à être soudé par la suite avec le fond 8 du boitier 6 d'accumulateur.

On thermoscelle l'autre des extrémités latérales 10 du faisceau, avec le disque 131 du collecteur de courant 13. Le thermoscellage peut être réalisé par un appareillage spécifique à outillage circulaire chauffé à une température typiquement entre 120 et 250°C qui vient exercer une pression contrôlée sur le disque plein 131 contre l'extrémité latérale 10 du faisceau F.

Pour finaliser la réalisation définitive de l'accumulateur, on procède comme usuellement.

Ainsi, bien que non représenté, on introduit le faisceau avec le collecteur 13 thermoscellé dans un récipient rigide en aluminium formant uniquement l'enveloppe latérale 7 du boitier 6. On veille en particulier lors de cette étape à ce que la languette 130 ne gêne pas l'introduction. Pour ce faire, on replie celle-ci avantageusement vers le haut.

On soude le collecteur 14 avec le fond 8 du boitier 6.

On soude la languette 130 du collecteur 13 à un pôle négatif 50 formant une traversée d'un couvercle 9 de boitier 6.

On soude alors le couvercle 9 au récipient rigide métallique 7.

Puis on effectue une étape de remplissage du boitier 6 à l'aide d'un électrolyte, au travers d'une ouverture débouchante non représentée qui est pratiquée dans le couvercle 9.

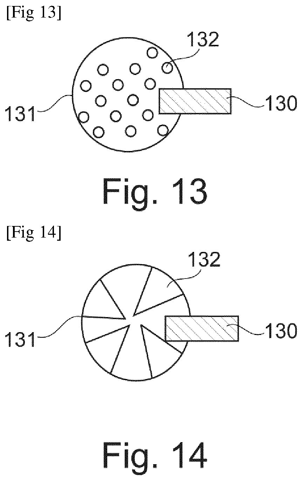

Pour optimiser le remplissage avec l'électrolyte en vue d'imprégner le séparateur 1, on peut prévoir un disque 131 avec des orifices 132 débouchant sur le faisceau. Par exemple, ces orifices débouchants 132 peuvent être de section circulaire (figure 13) ou en portion de cercle (figure 14). Bien entendu, toute autre forme d'orifices peut convenir en vue d'optimiser le temps et la qualité du remplissage et de l'imprégnation du séparateur par l'électrolyte.

La réalisation de l'accumulateur Li-ion selon l'invention prend fin par le bouchage de l'ouverture de remplissage du couvercle 9.

D'autres avantages et améliorations pourront être apportées sans pour autant sortir du cadre de l'invention.

Si dans l'exemple illustré, le collecteur de courant sous la forme d'un disque 131 à polymère thermoplastique chargée en particules et/ou fibres métallique est celui reliant le faisceau électrochimique à la borne négative au moyen d'une languette 130, on peut aussi réaliser un disque 14 sans languette pour relier directement le faisceau au fond du boitier d'accumulateur. Les deux collecteurs de courant 13, 14 peuvent comprendre une partie en polymère thermoplastique chargée de particules et/ou fibres métalliques.

Dans l'exemple illustré, le collecteur de courant est sous la forme d'un disque de diamètre sensiblement égal à celui du faisceau électrochimique. Toute autre forme de plaquette à base de polymère thermoplastique chargée de particules et/ou fibres électriquement conductrices, qui peut être thermoscellée sur toute ou partie d'une extrémité latérale de faisceau, convient dans le cadre de l'invention.

### Liste des références citées :

[1] Xuning Fenga, et al. « Key Characteristics for Thermal Runaway of Li-ion Batteries » Energy Procedia, 158 (2019) 4684-4689

## Revendications

1. Accumulateur électrochimique métal-ion comprenant :
- un faisceau électrochimique (F) comportant au moins une cellule électrochimique (C) constituée d'une cathode (2) et d'une anode (3) de part et d'autre d'un séparateur (4) imprégné d'un électrolyte, la cathode et l'anode comprenant chacune un substrat, formé d'un feuillard métallique qui supporte dans sa portion centrale un matériau actif d'insertion d'ion métal, tandis que sa bande latérale, dite rive, est dépourvue de matériau actif d'insertion, le faisceau ayant une forme allongée selon un axe longitudinal X1, avec à l'une (10) de ses extrémités latérales, la bande latérale (30) de l'anode et à l'autre (11) de ses extrémités latérales la bande latérale (20) de la cathode;
- un boitier métallique (6) agencé pour contenir le faisceau électrochimique (5) avec étanchéité, comportant :
un fond (8) auquel est soudé un collecteur de courant; et
un couvercle (9) avec une traversée formant une borne de sortie à laquelle est soudé un autre collecteur de courant,
l'un et/ou l'autre des collecteurs de courant (13, 14) comprenant au moins une partie d'une plaquette (131) en polymère thermoplastique chargée en particules et/ou fibres électriquement conductrices, thermoscellée à l'une des extrémités latérales du faisceau électrochimique.

2. Accumulateur selon la revendication 1, le polymère thermoplastique étant choisi parmi le styrène butadiène, le polyéthylène et le polyéthylène glycol.

3. Accumulateur selon la revendication 1 ou 2, les particules et/ou fibres étant en métal ou alliage métallique, choisi parmi le cuivre, l'aluminium et le nickel et leurs alliages.

4. Accumulateur selon l'une des revendications précédentes, la proportion des particules et/ou fibres dans le polymère étant comprise entre 20 et 80%.

5. Accumulateur selon l'une des revendications précédentes, la plaquette étant un disque de diamètre sensiblement égal au diamètre du faisceau électrochimique.

6. Accumulateur selon l'une des revendications précédentes, la plaquette comprenant des orifices (132) débouchant adaptés pour laisser passer l'électrolyte d'imprégnation du séparateur.

7. Accumulateur selon l'une des revendications précédentes, l'un et/ou l'autre des collecteurs de courant (13, 14) comprenant une languette métallique (130) de connexion à une borne de sortie, la plaquette étant thermoscellée à la languette.

8. Accumulateur Li-ion selon l'une des revendications précédentes dans lequel :
- le matériau d'électrode(s) négative(s) est choisi dans le groupe comportant le graphite, le lithium, l'oxyde de titanate Li₄TiO₅O₁₂ ;
- le matériau d'électrode(s) positive(s) est choisi dans le groupe comportant LiFePO₄, LiCoO₂, LiN_{0.33}Mn_{0.33}Co_{0.33}O₂, LiNi_{0.6}Co_{0.2}Mn_{0.2}O₂, LiNi_{0.8}Mn_{0.1}Co_{0.1}O₂, NiCoAl.

9. Module de batterie ou pack-batterie comprenant une pluralité d'accumulateurs selon l'une des revendications précédentes, reliés électriquement en série ou en parallèle les uns aux autres.

10. Procédé de réalisation d'une partie de raccordement électrique entre un faisceau électrochimique (F) d'un accumulateur (A) métal-ion et l'une des bornes de sortie de l'accumulateur, comportant les étapes suivantes :
- fourniture d'un faisceau électrochimique (F) comportant au moins une cellule électrochimique (C) constituée d'une cathode (2) et d'une anode (3) de part et d'autre d'un séparateur (4) destiné à être imprégné d'un électrolyte, la cathode et l'anode comprenant chacune un substrat, formé d'un feuillard métallique qui supporte dans sa portion centrale un matériau actif d'insertion d'ion métal, tandis que sa bande latérale, dite rive, est dépourvue de matériau actif d'insertion, le faisceau ayant une forme allongée selon un axe longitudinal X1, avec à l'une (10) de ses extrémités latérales, la bande latérale (30) de l'anode et à l'autre (11) de ses extrémités latérales la bande latérale (20) de la cathode;
- thermoscellée à l'une et/ou l'autre des extrémités latérales du faisceau électrochimique d'un collecteur de courant (13, 14) comprenant au moins une partie d'une plaquette en polymère thermoplastique chargé en particules et/ou fibres électriquement conductrices, destinée à être liée ou connectée électriquement à une borne de sortie (40, 50) de l'accumulateur.

11. Procédé selon la revendication 10, le thermoscellage étant réalisé à une température entre 120 et 250°C.

12. Procédé selon la revendication 10 ou 11, le thermoscellage étant réalisé en appliquant un effort de pression de la plaquette contre l'une et/ou l'autre des extrémités latérales du faisceau électrochimique.

13. Procédé selon l'une des revendications 9 à 12, le faisceau électrochimique étant constitué d'une seule cellule électrochimique (C) enroulée sur elle-même par bobinage.
